# EUROPEAN PATENT APPLICATION

(11) **EP 1 936 526 A1**
(43) Date of publication of application: **25.06.2008**
(21) Application number: 06126823.1
(22) Date of filing: 21.12.2006
(51) Int. Cl.: G06F 21/00

(54) **Software license management in a mobile device**

(71) Applicant: Sysopen Digia Oyj, 00380 Helsinki (FI)
(72) Inventor: Kölbl, Wolfgang, Nurmijärvi 01900 (FI); Tulonen, Kai, Espoo 02940 (FI); Pora, Heikki, Helsinki 00980 (FI)
(74) Representative: Pykälä, Timo Tapani

(57) **Abstract**

Software license management in a mobile device is disclosed. A device identification and/or a network-based identification are automatically determined (140) in a mobile device (102). A license request including the captured device identification and/or the network-based identification is transferred (142) from the mobile device (102) to a computer (112). A software license is granted to a user specified by the device identification and/or the network-based identification provided that a predetermined condition is fulfilled (144). The software license tied with the device identification and/or the network-based identification is transferred from the computer (112) to the mobile device (102).

## Description

### Field

The invention relates to a system, mobile device, computer, computer program for the mobile device, computer program for the computer, and method.

### Background

Applications running on mobile phones are mostly licensed based on an identification (international mobile equipment identity IMEI or international mobile subscriber identity IMSI), which can be queried from the user of the mobile phone. The identification is usually a fairly large number, not easily remembered by the user, and this number is usually also not known to other parties.

One solution would be to use the mobile subscriber international ISDN number MSISDN related to the mobile phone for licensing purposes. However, the mobile phone does not itself know its MSISDN, as it belongs to the responsibilities of the network coupled with the mobile phone. Asking MSISDN from the user is not feasible either, because the user could easily enter another MSISDN to which the application is already licensed.

If a company knows MSISDN of a customer and wants to provide this customer with a license, they would usually have to ask the identification (IMEI or IMSI) from the customer, create a license based on the obtained identification and send the license to the customer. The customer may provide an incorrect identification (because of a typing mistake, for example). This would make the license invalid as well. The company would either really not know whether the customer really made a typing mistake, or was just trying to get another license for free.

Some network operators already provide the identification-to-MSISDN mapping with their WAP (Wireless Application Protocol) service. This approach necessitates that the license-related transactions must be performed via the WAP gateway of the operator. All transactions are locked to a single operator, and the operator usually invoices the costs of their service. Furthermore, MSISDN is still only known to the server and not to the mobile phone.

### Brief description

The present invention seeks to provide an improved system, mobile device, computer, computer programs for both the mobile device and the computer, and method.

According to an aspect of the present invention, there is provided a system as specified in claim 1.

According to another aspect of the present invention, there is provided a mobile device as specified in claim 10.

According to another aspect of the present invention, there is provided a computer as specified in claim 11.

According to another aspect of the present invention, there is provided a computer program as specified in claim 12.

According to another aspect of the present invention, there is provided a computer program as specified in claim 13.

According to another aspect of the present invention, there is provided a method as specified in claim 14.

According to another aspect of the present invention, there is provided a mobile device as specified in claim 23.

According to another aspect of the present invention, there is provided a computer as specified in claim 24.

### List of drawings

Embodiments of the present invention are described below, by way of example only, with reference to the accompanying drawings, in which

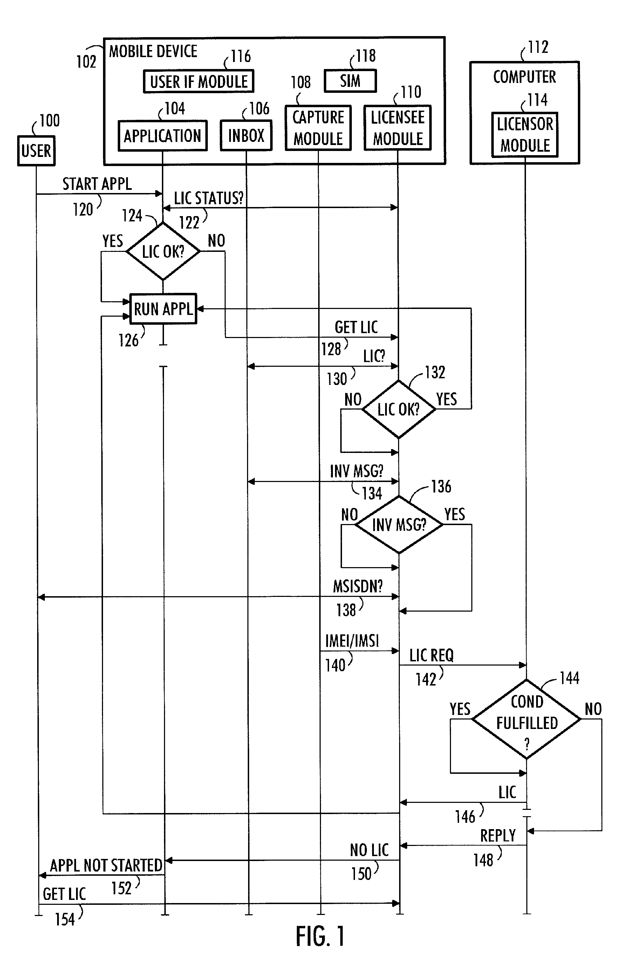

Figure 1 illustrates embodiments of a mobile device and a computer.

### Description of embodiments

Figure 1 illustrates embodiments of a mobile device 102 and a computer 112, with which software licenses may be securely and remotely managed with only minimal user interaction.

The mobile device 102 refers to a portable computing device. Such computing devices include wireless mobile communication devices operating with or without a subscriber identification module (SIM), including, but not limited to, the following types of devices: mobile phone, smartphone, personal digital assistant (PDA), handset. A wireless connection may be implemented with a wireless transceiver operating according to the GSM (Global System for Mobile Communications), WCDMA (Wideband Code Division Multiple Access), WLAN (Wireless Local Area Network) or Bluetooth® standard, or any other suitable standard/non-standard wireless communication means.

The computer 112 may be a server, which may be connected to the Internet. The computer 112 may be an electronic digital computer, which may comprise a working memory (RAM), a central processing unit (CPU), and a system clock. The CPU may comprise a set of registers, an arithmetic logic unit, and a control unit. The control unit is controlled by a sequence of program instructions transferred to the CPU from the RAM. The control unit may contain a number of microinstructions for basic operations. The implementation of microinstructions may vary, depending on the CPU design. The program instructions may be coded by a programming language, which may be a high-level programming language, such as C, Java, etc., or a low-level programming language, such as a machine language, or an assembler. The computer may also have an operating system, which may provide system services to a computer program written with the program instructions.

The mobile device 102 comprises a capture module 108 configured to automatically determine a device identification and/or a network-based identification. The device identification comprises an international mobile equipment identity IMEI, but it may also be some other suitable identification means for the mobile device 102, such as a serial number of the mobile device 102. The network-based identification comprises an international mobile subscriber identity IMSI, but it may also be some other suitable identification identifying the mobile device 102 in the communications network level.

The determination of the device identification and/or a network-based identification is performed automatically, meaning that the user is not asked to provide the code, by pressing buttons of the user interface of the mobile device 102, for example. The determination may be performed without any user interaction, or with some user interaction, such as asking the user to confirm that it is all right to automatically determine the device identification and/or the network-based identification.

The mobile device 102 also comprises a licensee module 110 configured to transmit a license request including the captured device identification and/or the network-based identification to the computer 112. In addition to transmitting the license request, the licensee module 110 is also configured to receive a software license from the computer 112. The license request may be transferred over an IP (Internet Protocol) network, such as the Internet. The software license may be transferred utilizing a message service, such as the short message service SMS.

All the modules 108, 110 may be bundled in one library, which may be added to an application 104 in the mobile device. The licensee module 110 may comprise two modules, a license request module configured to transmit the license request, and a license reception module configured to receive the software license. The license reception module may be configured to wait for incoming SMS messages containing software licenses from the computer 112. Once the software license is received, the license information is stored in the mobile device 102, and the application 104 that has been granted the software license may be used.

The software license refers to a license granting permission to run the software application 104. The software license may authorise activities prohibited by copyright law, patent law, trademark law, or other intellectual property rights. In a strict sense, the software license is a complex document identifying the specific usage rights that are granted to the licensee, while also stating the license limitations. In the context of this document, the software license also refers to the actual grant, i.e. the software license received from the computer 112 may also include an activation code or the like, enabling the running of the licensed software application 104.

The computer 112 comprises a licensor module 110 configured to receive the license request. The licensor module 110 is also configured to grant a software license to a user specified by the device identification and/or the network-based identification provided that a predetermined condition is fulfilled. The predetermined condition may relate to any ground that may be formulated as a basis for the decision. The predetermined condition includes checking whether the user requesting the software license has made a monetary compensation for the company offering the software, or whether the user has credit, for example.

The licensor module 110 is also configured to transmit the software license tied with the device identification and/or the network-based identification to the mobile device 102. The software license is "tied" with the device identification and/or the network-based identification in the sense that the software runs only in the mobile device 102 having the defined device identification and/or the network-based identification. This prohibits the illegal use of the software in other mobile devices, for example.

The licensor module 114 may comprise two modules, a license request module configured to receive license requests from the mobile devices, and an SMS transmission module. Based on the information stored in the computer 112, the license request module will either generate the software license or refuse to generate the software license. The SMS transmission module is responsible for transmitting SMS messages to the mobile device 102.

Interfaces between the various modules in the mobile device 102 and the computer 112 may be implemented with suitable interface technologies, such as a message interface, a method interface, a sub-routine call interface, a block interface, or any means enabling communication between functional sub-units.

The mobile device 102 may further comprise a user interface module 116 configured to query a directory number of a subscriber identity module SIM 118 from a user of the mobile device 102. The SIM 118 is locatable in the mobile device 102, i.e. it may be inserted and removed as desired.

Besides by querying it, the directory number of the SIM 118 may be received from the outside of the mobile device 102. The licensor module 114 may be configured to transfer a directory number of the SIM 118 to the mobile device 102. Correspondingly, the licensee module 110 may be configured to receive the directory number of the SIM 118 from the computer 112.

If the MSISDN is delivered to the mobile device 102 before the software license is requested, the software license may be generated without any user interaction. The solution effectively frees the application/service provider from network operator lock-up by avoiding the operator-provided MSDISDN-to-identification mapping service.

The directory number of the SIM 118 may be included in an invitation message, which may contain a download link (which the user can click on his mobile device 102) as well as the MSISDN of the mobile device 102. The following is an example of a text in an invitation message: "Download MobileEmail application from http://www.company.com/mobileEmail. Software registered to: John Doe (+3581234567890)." The user may click on the link and download and install the application 104 to his/her mobile device 102. The computer 112 may comprise an invitation module, being responsible for generating the invitation messages.

The licensee module 110 may be configured to include the directory number of the SIM 118 in the license request. The licensor module 114 may be configured to tie the software license, besides the device identification and/or the network-based identification, also with the directory number of the SIM 118.

The licensor module 114 may be configured to transmit the software license to the mobile device 102 identified by the directory number of the SIM 118. In such a case, only the mobile device 102 with the correct MSISDN is able to receive the software license, for example.

The licensor module 114 may be configured to transmit a license revoke message to the mobile device 102. Correspondingly, the licensee module 110 may be configured to receive the license revoke message from the computer 112, and to revoke the software license. The licensee module 110 may check whether the license revoke message is authentic (i.e. sent by the server). If the license revoke message is authentic, the licensee module 110 may remove a possible activation code and/or the software application 104 from the mobile device 102. Because the activation code is stored in a private location, the user cannot save it for later illegal use of the software. Optionally, a confirmation message may be sent to the computer 112, after the software application 104 has been successfully removed from the mobile device 102.

An embodiment provides a computer program comprising program instructions which, when loaded into the mobile device 102, constitute the modules 108, 110 of the mobile device 102.

Another embodiment provides a computer program comprising program instructions which, when loaded into the computer 112, constitute the modules 114 of the computer 112.

The computer program may be in source code form, object code form, or in some intermediate form, and it may be stored in some sort of carrier, which may be any entity or device capable of carrying the program. Such carriers include a record medium, computer memory, read-only memory, electrical carrier signal, telecommunications signal, and software distribution package, for example. Depending on the processing power needed, the computer program may be executed in a single computer 112 or it may be distributed amongst a number of computers, and it may be executed in a single processor of the mobile device 102, or it may be distributed amongst a number of processors of the mobile device 102.

Figure 1 also illustrates exemplary communication between the mobile device 102 and the computer 112.

A user 100 starts 120 the application 104. After being started, the application 104 may check 122 from the licensee module 110 whether the software license exists.

Next, the application 104 may test 124 whether the software license was found and if it is valid. If the valid software license exists, the application 104 runs 126 normally.

If the software license was not found or it is not valid, the application 104 requests 128 that the licensee module 110 obtain the valid software license.

First, the licensee module 110 may check 130 if a valid software license is in an inbox 106, i.e. in an incoming mail residing in the inbox 106. The term inbox refers to an incoming mailbox, or any other means for manipulating incoming messages. The valid software license may be in the inbox 106, if the license request process has been interrupted previously, for example.

Next, the licensee module 110 tests 132 whether the software license was found and if it is valid. If the valid software license is found, the software license is installed and the application 102 runs 126 normally.

If the software license was not found or it is not valid, the licensee module 110 may check 134 if it can find an invitation message in the inbox 106. Next, the licensee module 110 tests 136 whether an invitation message was found. If the invitation message was found, MSISDN may be extracted from this invitation message, otherwise the MSISDN may be queried 138 from the user 100.

Next, the capture module 108 determines 140 an IMEI and/or IMSI.

The licensee module 110 then transfers 142 the license request to the computer 112.

The licensor module 114 grants a software license to the user that sent the license request provided that a predetermined condition is fulfilled. The fulfilment of the condition is tested 144: if the condition is fulfilled, the software license is transferred 146 to the mobile device 102, otherwise a reply (including possibly a reason for not granting the requested software license) may be transferred 148 to the mobile device 102.

If the software license is received in the mobile device, the application starts to run 126 normally, otherwise the licensee module 110 may report 150 to the application 104 that no software license was granted, and the application 104 may indicate 152 to the user 100 why the application 104 was not able to run. If the license acquiring did not succeed, the user 100 may start 154 another round of license acquiring with the licensee module 110. The user may perform the missing action, such as a payment, in connection with the new round.

The illustrated action sequence only describes one possibility. The required operations may be implemented in many different ways. The core of the method includes the following: determining 140 automatically a device identification and/or a network-based identification in a mobile device 102; transferring 142 a license request including the captured device identification and/or the network-based identification from the mobile device 102 to a computer 112; granting 144 a software license to a user specified by the device identification and/or the network-based identification provided that a predetermined condition is fulfilled; and transferring 146 the software license tied with the device identification and/or the network-based identification from the computer 112 to the mobile device 102.

Even though the invention has been described above with reference to an example according to the accompanying drawings, it is clear that the invention is not restricted thereto but can be modified in several ways within the scope of the appended claims.

## Claims

1. A system comprising:
a mobile device comprising a capture module configured to automatically determine a device identification and/or a network-based identification, and a licensee module configured to transmit a license request including the captured device identification and/or the network-based identification to a computer, and to receive a software license from the computer; and
a computer comprising a licensor module configured to receive the license request, to grant a software license to a user specified by the device identification and/or the network-based identification provided that a predetermined condition is fulfilled, and to transmit the software license tied with the device identification and/or the network-based identification to the mobile device.

2. The system of claim 1, wherein the mobile device further comprises a user interface module configured to query a directory number of a subscriber identity module locatable in the mobile device from a user of the mobile device.

3. The system of claim 1, wherein the licensor module is further configured to transfer a directory number of a subscriber identity module locatable in the mobile device to the mobile device, and the licensee module is further configured to receive the directory number of the subscriber identity module from the computer.

4. The system of claim 2 or 3, wherein the licensee module is further configured to include the directory number of the subscriber identity module in the license request.

5. The system of any preceding claim 2 to 4, wherein the licensor module is further configured to tie the software license also with the directory number of the subscriber identity module.

6. The system of any preceding claim 2 to 5, wherein the licensor module is further configured to transmit the software license to the mobile device identified by the directory number of the subscriber identity module.

7. The system of any preceding claim, wherein the licensor module is further configured to transmit a license revoke message to the mobile device, and the licensee module is further configured to receive the license revoke message from the computer, and to revoke the software license.

8. The system of any preceding claim, wherein the device identification comprises an international mobile equipment identity.

9. The system of any preceding claim, wherein the network-based identification comprises an international mobile subscriber identity.

10. A mobile device of any preceding claim.

11. A computer of any preceding claim 1 to 9.

12. A computer program comprising program instructions which, when loaded into the mobile device, constitute the modules of the mobile device of any preceding claim 1 to 9.

13. A computer program comprising program instructions which, when loaded into the computer, constitute the modules of the computer of any preceding claim 1 to 9.

14. A method comprising:
determining automatically a device identification and/or a network-based identification in a mobile device;
transferring a license request including the captured device identification and/or the network-based identification from the mobile device to a computer;
granting a software license to a user specified by the device identification and/or the network-based identification provided that a predetermined condition is fulfilled; and
transferring the software license tied with the device identification and/or the network-based identification from the computer to the mobile device.

15. The method of claim 14, further comprising:
querying a directory number of a subscriber identity module locatable in the mobile device from a user of the mobile device.

16. The method of claim 14, further comprising:
transferring a directory number of a subscriber identity module locatable in the mobile device from the computer to the mobile device.

17. The method of claim 15 or 16, further comprising:
including the directory number of the subscriber identity module in the license request.

18. The method of any preceding claim 15 to 17, further comprising:
tying the software license also with the directory number of the subscriber identity module.

19. The method of any preceding claim 15 to 18, further comprising:
transferring the software license to the mobile device identified by the directory number of the subscriber identity module.

20. The method of any preceding claim 14 to 19, further comprising:
transferring a license revoke message from the computer to the mobile device; and
revoking the software license in the mobile device.

21. The method of any preceding claim 14 to 20, wherein the device identification comprises an international mobile equipment identity.

22. The method of any preceding claim 14 to 21, wherein the network-based identification comprises an international mobile subscriber identity.

23. A mobile device comprising:
means for automatically determining a device identification and/or a network-based identification;
means for transmitting a license request including the captured device identification and/or the network-based identification to a computer; and
means for receiving a software license tied with the device identification and/or the network-based identification from the computer.

24. A computer comprising:
means for receiving a license request including a captured device identification and/or a network-based identification from a mobile device;
means for granting a software license to a user specified by the device identification and/or the network-based identification provided that a predetermined condition is fulfilled; and
means for transmitting the software license tied with the device identification and/or the network-based identification to the mobile device.
